# NEUE EUROPÄISCHE PATENTSCHRIFT

(11) **EP 2 165 166 B2**
(45) Veröffentlichungstag und Bekanntmachung des Hinweises auf die Entscheidung über den Einspruch: **06.02.2019**
(45) Hinweis auf die Patenterteilung: 06.04.2016
(21) Anmeldenummer: 08774762.2
(22) Anmeldetag: 04.07.2008
(51) Int. Cl.: G01G 21/26

(54) **KONTROLLGEWICHT, VERFAHREN UND SYSTEM ZUR RÜCKVERFOLGBARKEIT SOLCHER GEWICHTE**
CONTROL WEIGHT, METHOD AND SYSTEM FOR TRACKING SUCH WEIGHTS
POIDS DE CONTRÔLE, PROCÉDÉ ET SYSTÈME DESTINÉS À LA TRAÇABILITÉ DE TELS POIDS

(30) Priorität: 06.07.2007 EP 07111973
(43) Veröffentlichungstag der Anmeldung: 24.03.2010
(73) Patentinhaber: Mettler-Toledo GmbH, 8606 Greifensee (CH)
(72) Erfinder: HAUSSMANN, Holger, CH-8623 Wetzikon (CH); NATER, Roland, CH-8405 Winterthur (CH); VON ARX, Patrick, CH-8404 Winterthur (CH); BURKHARD, Hans-Jörg, CH-8633 Wolfhausen (CH); GREUTER, Michael, CH-8305 Dietlikon (CH)
(74) Vertreter: Leinweber & Zimmermann
(86) Internationale Anmeldenummer: PCT/EP2008/058650
(87) Internationale Veröffentlichungsnummer: WO 2009/007312

(56) Entgegenhaltungen:
- EP-A- 1 585 000
- WO-A-2006/056830
- DE-A1- 4 006 375
- DE-C- 326 360
- US-A1- 2002 166 706

## Beschreibung

Die Erfindung betrifft im Bereich der Metrologie Gewichte zur Kontrolle von Waagen und zur Kontrolle oder Bestimmung anderer Gewichte.

Verschiedene Einflüsse können insbesondere bei sensiblen Waagen, wie Mikro- und Ultramikrowaagen, Analysewaagen oder Präzisionswagen, im Laufe der Zeit zu Messabweichungen führen. Solche Waagen müssen deshalb regelmässig kontrolliert werden, um sicherzustellen, dass sie zutreffende Wägeergebnisse liefern. Solche Kontrollen, sogenannte Routinetests in einem regulierten Umfeld, sind insbesondere für die Anwendung von Waagen in den Bereichen Pharma, Biotechnologie und Lebensrnitteltechnologie vorgeschrieben und in den "FDA-Regulations" festgeschrieben. Jedoch empfehlen auch die Waagen hersteller ihren Kunden für im kommerziellen Bereich eingesetzte Waagen, Kontrollen in regelmässigen Zeitabständen durchzuführen.

Zur Bestimmung von Abweichungen dienen Konfirollgewichte mit definierten Gewichtswerten. Für derartige Kontrollgewichte werden nach entsprechenden Normen, z.B. der weltweit gültigen Norm R111 der OIML (Organisation Internationale de Metrologie Légale) Toleranzgrenzen vorgegeben, innerhalb derer sich die tatsächlichen Ist-Gewichtswerte im Verhältnis zum Soll-Gewichtswert (Nominalgewichtswert) befinden dürfen. Dabei werden die Gewichte innerhalb der unterschiedlichen Gewichtsklassen nach unterschiedlichen Präzisionsanforderungen unterteilt. So liegt beispielsweise die Toleranzgrenze für ein 1-mg-Gewicht in der Klasse E1 (höchste Genauigkeitsklasse) bei ± 0,003 mg, während sie in der Klasse M1 (niedrigste Genauigkeitsklasse bei einem 1-mg-Gewicht) ± 0,2 mg beträgt.

Kontrollgewichte im vorliegenden Zusammenhang sind als Gewichte jeglicher Art zu verstehen, die der Kontrolle und/oder Kalibrierung und/oder Eichung von Waagen oder anderer Gewichte dienen und insbesondere in einem regulierten Umfeld Einsatz finden. Diese Kontrollgewichte werden gelegentlich auch als "Eichgewichte" oder "Kalibriergewichte" bezeichnet.

Kontrollgewichte können einstückig oder mehrstückig gefertigt sein. Einstückige Kontrollgewichte werden aus einem Materialblock gefertigt, während mehrstückige Kontrollgewichte innen einen Hohlraum haben, der so lange mit sogenanntem Justiermaterial gefüllt wird, bis das Sollgewicht erreicht ist, und dann verschlossen wird. Allerdings sind mehrstückige Kontrollgewichte für die höchsten Genauigkeitsklassen gemäss OIML nicht zulässig.

Da sich die tatsächlichen Ist-Gewichtswerte von Kontrollgewichten im Laufe der Zeit durch Abnutzung verändern, könnten in der Folge, wenn diese Kontrollgewichte zur Kontrolle von Waagen verwendet werden, auch Wägeergebnisse oder industrielle Prozesse ihre Toleranzwerte überschreiten. Deshalb muss sichergestellt werden, dass die jeweils vorgegebene Toleranzgrenze der Kontrollgewichte eingehalten wird. Hierzu werden Kontrollgewichte selbst einer regelmässigen Kontrolle mit entsprechenden anderen Kontrollgewichten, sogenannten Check-Standards, unterzogen. Die Zeitintervalle für derartige Kontrollen ergeben sich aus der jeweiligen Genauigkeitsklasse der Gewichte bzw. aus dem Einsatzgebiet und den Einsatzbedingungen.

Für jedes einzelne Kontrollgewicht wird auf Verlangen ein Zertifikat ausgestellt, in dem sein Ist-Gewicht zum betreffenden Zeitpunkt, sein Nominalgewicht, seine Genauigkeitsklasse in Bezug auf eine vorgegebene Klassengrenze sowie eine Kalibrier-Identifikationsnummer und die Zertifikatsnummer aufgeführt wird. Bei einem später erfolgenden Kontrollvorgang, einer sogenannten Rekalibrierung, wird jeweils ein neues Zertifikat ausgestellt, wobei eine neue Zertifikatsnummer dem gleichen Gewicht zugeordnet wird, die Kalibrier-Identifikationsnummer jedoch dem Gewicht zugeordnet bleibt.

Die Kontrollgewichte bzw. die entsprechenden Gewichtssätze mit Kontrollgewichten unterschiedlicher Gewichtswerte werden für den Vertrieb und die Lagerung bei der späteren Verwendung durch die Anwender in speziellen Gewichtsbehältnissen gelagert. Dabei sind für jeden Gewichtswert entsprechend bemessene Aussparungen in einem solchen Behältnis vorgesehen, so dass beispielsweise ein 100-g-Gewicht exakt nur in die Aussparung für 100-g-Gewichte passt, aber nicht in eine Aussparung für ein 50-g-Gewicht, während die Aussparung für ein 200-g-Gewicht nicht vollständig ausgefüllt werden würde, so dass die grössenmässige Zuordnung der Gewichtsstücke möglich ist. Die Zertifikate der einzelnen Gewichtsstücke sind diesen Behältnissen beigefügt, so dass der Zusammenhang zwischen Zertifikat und Kontrollgewichtsstück prinzipiell gegeben ist. Dies erfolgt in der Regel vermittels eines auf dem Behältnis angebrachten Etiketts, auf dem die Kalibrier-Identifikationsnummer aufgedruckt ist, und eines weiteren Etiketts, auf dem die Zertifikatsnummer aufgedruckt ist.

Durch die manuelle Handhabung der Kontrollgewichte bei deren Benutzung, wenn die eingangs erwähnten Routinetests durchgeführt werden, ist es jedoch leicht möglich, dass der Zusammenhang zwischen dem Gewichtsstück und seinem dazugehörigen Zertifikat bzw. seiner Kalibrier-Identifikationsnummer verlorengeht. Dies kann zum Beispiel dann geschehen, wenn eine Waage beispielsweise auf 400 g geeicht bzw. kalibriert werden soll und hierfür- weil kein 400-g-Gewichtsstück vorhanden ist - stattdessen ein 200-g-Gewichtsstück und zwei 100-g-Gewichtsstücke verwendet werden. Unabhängig davon, ob die zwei 100-g-Gewictitsstücke in demselben Behältnis aufbewahrt waren oder aus zwei verschiedenen Behältnissen stammen, kann es dabei zu Handhabungsfehlern und damit zu einem Vertauschen der zwei 100-g-Gewichtsstücke kommen. Die falsche Zuordnung von Zertifikat zu Gewichtsstück ist die Folge, die nicht einmal wirksam überprüft werden kann, so dass ein solcher Fehler unentdeckt bleibt.

Problematisch bei dieser Methode ist, dass es keine eindeutige Zuordnung von Zertifikat zum Kontrollgewicht, also zum Gewichtsstück selbst gibt. Daher ist die Handhabung solcher Kontrollgewichte mit der grösstmöglichen Sorgfaltspflicht verbunden, um die Zuordnung zwischen Zertifikat und kalibriertem Gewichtsstück dauerhaft sicherzustellen. Und dennoch ist keine Sicherheit gegeben, dass dies erreicht wird. Unbeabsichtigte Vertauschungen sind weder ausgeschlossen noch zuverlässig nachträglich feststellbar.

Aus der DE 40 06 375 A1 ist bekannt, Kontrollgewichte mit einer ihren Gewichtswert kennzeichnenden Codierung auszustatten. Dies erfolgt mittels elektronischer Speicherung des Gewichtswerts innerhalb einer Gewichtselektronik, die im Gewichtsstück selbst enthalten ist. Dies hat den Nachteil, dass elektrische Kontakte zur Übermittlung dieser Daten vom Gewichtsstück an die Waage und auch zurück erforderlich sind, die eine definierte Gewichtspositionierung und insbesondere besondere Vorrichtungen erfordern, die die Herstellung und Verwendung fehleranfällig machen. Auch ist eine elektronische Speicherung nicht völlig fehlerresistent, so dass Datenfehler durch Fehlbehandlung der Kontrollgewichte oder auch durch Materialermüdung und somit daraus resultierende Eichfehler auch hier nicht völlig ausgeschlossen werden können. Auch ist die Herstellung solcher Kontrollgewichte aufwändig.

Da die Kennzeichnung nur den anfänglichen Ist-Gewichtswert enthält, ist durch diese Codierung keine individuelle Identifikation jedes einzelnen Gewichtsstücks gegeben, sondern nur eine Klassifizierung nach dem Gewichtswert. Die Rückverfolgung eines individuellen Gewichtsstücks nach dem beschriebenen Verfahren ist nur insofern möglich, als die höchstmögliche Anzahl durchführbarer Kontrollvorgänge im elektronischen Gewichtsspeicher aufgenommen ist und jeder Kontrollvorgang gezählt wird, bis diese Obergrenze erreicht ist. Rückverfolgungen über diesen Rahmen hinaus oder bezüglich anderer Vorgänge, z.B. bezüglich Herstellungsort, -datum, -serie usw. sind nicht möglich. Eine Rückrufaktion, die z.B. bei einem Produktionsfehler einer Serie erforderlich sein könnte, ist bei solchermassen gekennzeichneten Kontrollgewichten daher nicht möglich.

Aufgabe der Erfindung ist es daher, ein Kontrollgewicht derart auszugestalten, dass es dauerhaft individuell rückverfolgbar ist.

Dies wird dadurch erreicht, dass das Kontrollgewicht selbst eine Kennzeichnung beziehungsweise Markierung durch einen ohne oder unter minimalem Materialverlust dauerhaft aufgebrachten maschinenlesbaren Identifizierungscode an seiner Aussenseite aufweist, der das einzelne Gewichtsstück als Individuum wiedererkennbar macht, wobei der maschinenlesbare Identifizierungscode als Matrix-Code oder als miniaturisierter Barcode ausgebildet ist.

Dies hat den Vorteil, dass derartige Kontrollgewichte dauerhaft und zuverlässig ihren Zertifikaten zugeordnet werden können und sämtliche Informationen maschinell erfasst sowie verarbeitet und ggf. zentral gespeichert werden können. Verwechslungen im Rahmen von Handhabungen können somit weitgehend vermieden werden, beziehungsweise nachträglich zuverlässig festgestellt werden. Ferner sind bespielweise im Fall von nach OIML in die Stufe "E" einklassierten Kontrollgewichten Umklassifizierungen in eine andere Genauigkeitsklasse bei festgestelltem Überschreiten der Toleranzgrenze problemlos möglich.

Eine solche Kennzeichnung ist sowohl für einstückige als auch für mehrstückige Kontrollgewichte vorteilhaft. Kontrollgewichte bestehen aus einem Metall beziehungsweise einer Metall-Legierung mit konstanter, das heisst von den anwendbaren Normen vorgeschriebener, Dichte.

Das Anbringen des Identifzierungscodes an der Aussenseite des Gewichtsstücks hat den Vorteil, dass das Anbringen und die Lesbarkeit des Identifizierungscodes auf einfache Weise gewährleistet ist.

Vorteilhafte Ausgestaltungen sehen vor, dass der Identifizierungscode in dualer Darstellungsweise aufgebracht

Bevorzugt ist, dass der Identifizierungscode eine eindeutig dem Gewichtsstück zugeordnete Gewichtsnummer aufweist.

Sinnvolle Weiterbildungen sehen vor, dass der Identifizierungscode weitere Informationen über das betreffende Gewichtsstück enthält. Diese können beispielsweise dessen Fertigungslos-Nummer und Datumsangaben, insbesondere das Produktionsdatum, das Datum der Markierung und/oder das Datum der Erstkalibrierung umfassen. Dies hat den Vorteil, dass gegebenenfalls auch ohne Zugriff auf externe Datenbanken oder Datenvorhaltung auf eigenen Speichermedien Informationen im Kontrollverfahren zur Verfügung stehen und somit solche Prozesse vereinfacht und beschleunigt werden.

Aufgabe der Erfindung ist ferner, ein Verfahren bereitzustellen, mit dem solche Kontrollgewichte rückverfolgbar sind. Dies wird dadurch erreicht, dass
1) ein Identifizierungscode gebildet wird, der das einzelne Gewichtsstück als Individuum wiedererkennbar macht,
2) dieser Identifizierungscode in eine maschinenlesbare Codeform konvertiert wird und
3) die maschinenlesbare Codeform als Markierung ohne oder unter minimalem Materialverlust auf dem Gewichtsstück aufgebracht wird, wobei die Konvertierung in einen Matrix-Code oder in einen Miniatur-Barcode erfolgt.

Der Identifizierungscode umfasst im Wesentlichen eine eindeutig dem Kontrollgewicht zugeordnete Gewichtsnummer. Aber auch beliebige andere Zusammensetzungen des Identifizierungscodes sind denkbar. Wesentlich ist nur, dass der gebildete Identifizierungscode dazu geeignet ist, in den vorgesehenen auf das Gewichtsstück als Markierung aufzubringenden maschinenlesbaren Identifizierungscode konvertiert zu werden. Dieses Verfahren kann unmittelbar im Anschluss an die Herstellung der Kontrollgewichte oder auch zu einem späteren Zeitpunkt ausgeführt werden. Die Durchführung im Rahmen der Herstellung hat den Vorteil, dass jedes einzelne Gewichtsstück bereits ab dem Ende der Herstellung identifizierbar und damit rückverfolgbar ist. Die nachträgliche Durchführung hat den Vorteil, dass bereits in Benutzung befindliche Kontrollgewichte, insbesondere solche, deren Zuordnung zu ihrem Zertifikat verlorengegangen ist, nachträglich identifizierbar und damit erneut rückverfolgbar werden.

Eine vorteilhafte Ausführungsform des Markierungsverfahrens in dual darstellbarer Technik sieht vor, dass die Markierung mit Hilfe eines Lasers erfolgt. Dies hat den Vorteil, dass die Markierung ohne oder allenfalls unter minimalem Materialverlust ausgeführt werden kann und gleichzeitig dauerhaft am Gewichtsstück angebracht ist. Lasermarkierungsverfähren können ein einen Identifizierungscode enthaltendes Muster mittels Mattierung oder mittels der Methode der sogenannten Anlassfarben erzeugen.

Weitere gut geeignete Schreibverfahren für das Aufbringen einer Markierung sind beispielsweise Pinmarkieren, Ätzen oder Elektronenstrahlschreiben. Aber auch andere, hier nicht aufgeführte Methoden sind denkbar.

Eine vorteilhafte Weiterbildung des Verfahrens sieht vor, nach der Markierung des Kontrollgewichts den zugrundeliegenden Identifizierungscode in einer Datenbank dauerhaft abzulegen. Dies hat den Vorteil, dass eine systematische Ver-und Bearbeitung der erfassten Identifizierungscodes und der Daten der damit codierten Gewichtsstücke ermöglicht wird. Vorteilhafterweise werden auch die Zertifikatsdaten nach ihrer Erfassung zusammen mit dem Identifizierungscode in der Datenbank abgelegt. So können Zertifikatsdaten einzelner individueller Kontrollgewichte automatisch und damit auf einfache, zuverlässige Weise bereitgehalten und an anfordernde Stellen übermittelt werden.

Wird zu einem Kontrollgewicht ein Zertifikat erstellt, so wird auf diesem eindeutig auf den Identifizierungscode referenziert. Insbesondere, wenn der Identifizierungscode eine eindeutig dem Gewicht zugeordnete Gewichtsnummer umfasst, so findet sich diese auf dem Zertifikat wieder.

Da in einem Kontroll- bzw. Kalibrier- oder Rekalibrierverfahren auch ein weiteres Kontrollgewicht gegenüber einem ersten Kontrollgewicht, insbesondere gegenüber einem Check-Standard, verglichen werden kann, ist es von Vorteil, wenn der Identifizierungscode des ersten Kontrollgewichts, insbesondere des Checkstandards ebenfalls in die Datenbank aufgenommen wird und gegebenenfalls auf dem Zertifikat ausgewiesen wird. Auf diese Weise ist in hohem Masse eine Rückverfolgung möglich.

Die Zertifikatsdaten umfassen ferner die Kalibrier-Identifikationsnummer, die Zertifikatsnummer, das Datum der Zertifikatserstellung, Form und Material des Kontrollgewichts, die Identität der die Kontrollwägung ausführenden Person, die Wägebedingungen, die Umgebungsbedingungen, wie Temperatur und Luftdruck, den aktuellen Wägewert, sowie statistische Grössen die Kontrollwägung betreffend.

Da die Gewichtsstücke von Zeit zu Zeit rekalibriert werden ist es bevorzugt, durch die zeitliche Abfolge von Zertifikatsdaten ein Histörienfile für das betreffende Gewicht in der Datenbank zu erstellen. Damit können erfasste und/oder gespeicherte Daten mit jenen eines vorgängigen Zertifikats verglichen und die Ergebnisse weiter verarbeitet werden und gegebenenfalls aus den Ergebnissen Prognosen über die weitere Verwendbarkeit der Gewichte erstellt werden.

Aufgabe der Erfindung ist ferner, eine Waage zur Durchführung von Routinetests mit einem Kontrollgewicht und ein Verfahren zur Ausführung eines Routinetests zur Kontrolle einer solchen Waage bereitzustellen. Dies wird mit den Merkmalen der Ansprüche 1 und 2 erreicht.

Aufgabe der Erfindung ist ferner, ein System zu schaffen, mit dem Kontrollgewichte individuell und dauerhaft rückverfolgbar sind. Dies wird mit den Merkmalen des Anspruchs 7 sowie den Ausgestaltungen der darauf rückbezogenen Ansprüche erreicht. Diese Ausgestaltungen haben den Vorteil, dass eine systematische Verwaltung aller individuell gekennzeichneter Gewichtsstücke, insbesondere zentral möglich ist und jederzeit ein Zugriff auf sämtliche Daten zum jeweiligen individuellen Gewichtsstück erfolgen kann. Der oder die Prozessoren können den gelesenen Markierunsg code in den zugrundeliegenden Identifizierungscode zurückkonvertieren und dann unmittelbar verwenden. Die mindestens eine Speichereinheit dient dazu, den Identifizierungscode und vorteilhafterweise auch weitere erfasste Daten (z.B. auch die Zertifikatsdaten) zu dem betreffenden Gewichtsstück dauerhaft und wiederabrufbar zu speichern. Solche Daten werden idealerweise in einer Datenbank bereitgehalten, die eine zentrale Verfügbarkeit und schnelle systematische Auswertbarkeit ermöglicht. Damit ist für das jeweilige Gewichtsstück die Grundlage für die Rückverfolgbarkeit gegeben, die im Verlaufe der Lebensdauer eines Kontrollgewichts z.B. Rückschlüsse über die bisherige Abnutzung und damit auch Prognosen für die Zukunft erlaubt. Diese kann beispielsweise eine Empfehlung über ein verändertes Rekalibrierungsintervall betreffen, oder auch eine Reklassifizierung, wenn ein Kontrollgewicht seine Toleranzgrenze überschritten hat. Damit ist grösstmögliche Qualität in der Überwachung von Kontrollgewichten gegeben, was die Zuverlässigkeit der mit solchen Kontrollgewichten kontrollierten Waagen bzw. Gewichten erhöht.

Eine weitere vorteilhafte Ausgestaltung des Systems sieht vor, den mindestens einen Prozessor so auszustatten, dass er auf der Basis der ermittelten Ergebnisse und/oder Prognosen Nachrichten versenden kann, wie beispielsweise eine Mitteilung über den Ablauf einer Kontrollfrist. Dies hat den Vorteil, dass die Überwachung der Kontrollgewichte und ihrer Messungen systematisch und zuverlässig zentral, z.B. durch den Hersteller, gesteuert werden kann. Damit ist sichergestellt, dass die Verwender der Konrtrollgewichte unmittelbar und zuverlässig über erforderliche Massnahmen informiert werden können, was die Qualität der betroffenen Messsysteme erhöht.

Im Folgenden ist die Erfindung anhand der Zeichnung näher erläutert. Es zeigen:
- Fig. 1: ein beispielhaftes Kontrollgewicht in Seitenansicht,
- Fig. 2: ein beispielhaftes Kontrollgewicht in Draufsicht mit schematischer Darstellung des erfindungsgemässen in Form einer Markierung aufgebrachten maschinenlesbaren Identifizierungscodes,
- Fig. 3: eine vergrösserte Darstellung einer aufgebrachten Markierung in Form einer Matrix,
- Fig. 4: eine schematische Darstellung eines Systems für die Rückverfolgbarkeit eines Kontrollgewichts und
- Fig. 5: ein Flussdiagramm, welches den Ablauf eines Routinetests aufzeigt.

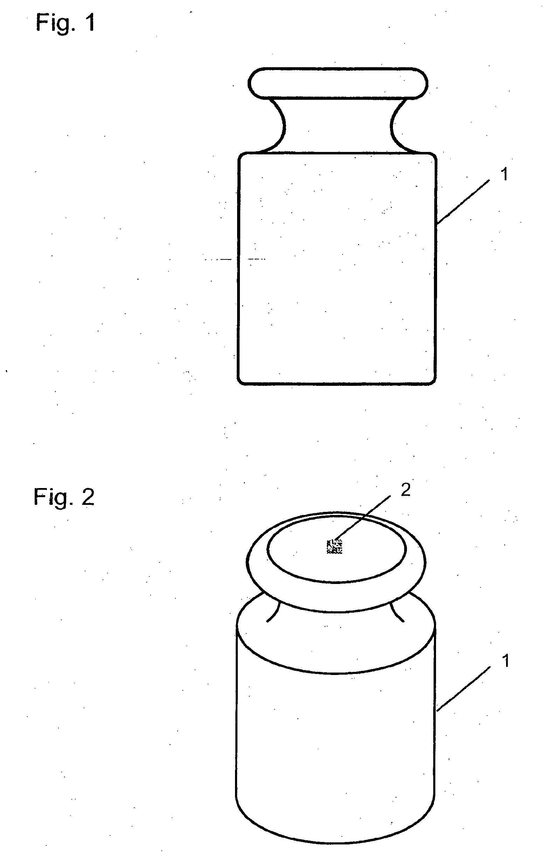

Figur 1 zeigt beispielhaft ein Kontrollgewicht 1. Selbstverständlich können die Proportionen solcher Kontrollgewichte 1 variieren oder die Gewichte 1 völlig anders geformt sein, insbesondere im Zusammenhang mit ihrem Nominalgewicht. So sind beispielsweise Gewichte der niedrigsten Gewichtswerte üblicherweise als sogenannte Drahtgewichte oder Plättchengewichte ausgestaltet.

Figur 2 zeigt ein erfindungsgemässes Kontrollgewicht 1 entsprechend der beispielhaften Darstellung in Figur 1 mit Markierung, die einen einen Identifizierungscode enthaltenden Matrix-Code 2 umfasst. Die Form und die Grösse des Matrix-Codes 2 ist nicht massstabgetreu. Je nach verwendeter Markierung können deren Form und Grösse variieren. Im Falle der genaueren Gewichts-Klassierungsstufen E und F ist jedoch die maximale Grösse vorgegeben. Auch kann die Anordnung auf dem Gewichtsstück variieren. Vorteilhafterweise ist sie oben angebracht, da sie dann auf einfache Weise lesbar ist. Andere Positionen sind jedoch genauso denkbar, wie seitlich oder an der Unterseite.

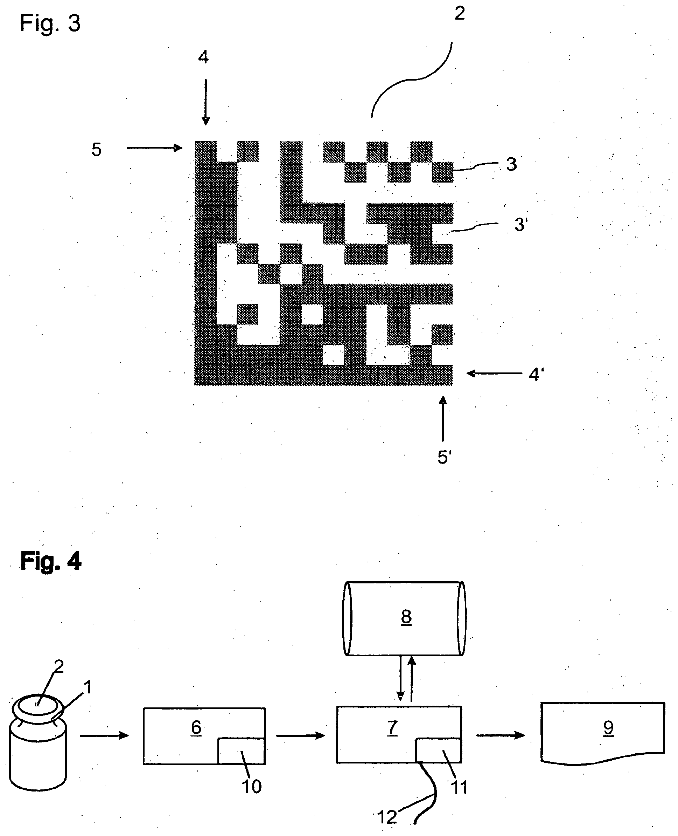

Figur 3 zeigt beispielhaft die Ausgestaltung einer solchen Markierung 2 in Form einer Matrix 2. Diese weist beispielhaft zwölf x zwölf Datenzellen 3, 3' auf, wobei die zwei verschiedenen Werte hier durch Darstellung als schwarze Datenzelle 3 und als weisse Datenzelle 3' beispielhaft dargestellt sind. Dabei bilden jeweils zwei über Eck zusammenhängende Datenzellenreihen 4, 4' und 5, 5' ein Muster, das dem Lesegerät ermöglicht, den Matrix-Code aufzufinden und in der richtigen Ausrichtung zu lesen bzw. zu interpretieren. Die zwei in Pfeilrichtung 4 und 4' verlaufenden Reihen von Datenzellen mit einheitlichen Werten (schwarz) stellen das Erkennungsmuster dar, die jeweils gegenüberliegenden Datenzellenreihen in Pfeilrichtung 5, 5' mit alternierenden Werten das Orientierungsmuster. Dabei dienen die Datenzellenreihen des Erkennungsmusters 4, 4' dazu, den Matrix-Code auf dem Gewicht aufzufinden und die Datenzellenmuster des gegenüberliegenden Orientierungsmusters 5, 5' zur richtigen Orientierung beim Lesen des Codes bzw. bei seiner Auswertung. Die von diesen Datenzellenreihen 4, 4' und 5, 5' eingeschlossenen Datenzellen stellen den eigentlichen Identifizierungscode dar.

Die Erzielung der dualen Wertepaare bei der Herstellung kann beispielsweise durch Mattierung einer glatten Oberfläche für die schwarz dargestellten Datenzellen 3 realisiert werden. Auch andere dual darstellbare Techniken können verwendet werden. Als Beispiel seien hier genannt das Erzeugen von Vertiefungen, wie etwa durch Pinmarkieren oder eine Farbänderung mittels Laser über sogenannte Anlassfarben oder alternativ durch Ätzen.

Figur 4 zeigt eine schematische Übersicht über ein System zur Rückverfolgbarkeit eines erfindungsgemäss hergestellten Kontrollgewichts 1. Das Lesegerät 6, welches mit einem Prozessor 10 ausgestattet ist, liest die aufgebrachte Markierung, hier den Matrix-Code 2. Der Prozessor 10 konvertiert diesen in einen Identifizierungscode und übermittelt diesen an einen ebenfalls mit einem oder mehreren Prozessoren ausgestatteten Rechner 7. Der Rechner 7 ist mit einer Datenbank 8 verbunden, welche alle erforderlichen Daten zur Erstellung eines Zertifikats 9 enthält. Mit Hilfe des Identifizierungscodes kann nun der Rechner 7 die benötigten Daten von der Datenbank 8 beziehen und ein Zertifikat 9 erstellen.

Dass jeder Identifizierungscode nur genau einmal vergeben wird, ist dadurch sichergestellt, dass die die Markierung, d.h. die den Matrix-Code 2, erzeugende Schreibvorrichtung (hier nicht gezeigt), welche beispielsweise einen Laser umfasst, mit entsprechenden Softwaremodulen ausgestattet ist.

Die Datenbank 8 ist dazu geeignet, weitere Daten zum gespeicherten Identifizierungscode aufzunehmen, insbesondere Daten, die für die Zertifizierung erforderlich sind, aber auch solche, die erst später, z.B. im Rahmen von Rekalibrierungsvorgängen entstehen.

Ferner können Mittel vorgesehen sein, die eine Fehlerüberprüfung des eingelesenen Matrix-Codes 2 ermöglichen.

Über die Datenverbindung 12, die hier nur angedeutet ist, können vom Prozessor 11 des Rechners 7 Daten an andere Prozessoren und/oder Rechner (nicht dargestellt) übermittelt oder von diesen empfangen werden. Diese Prozessoren können in unmittelbarer Direktverbindung mit dem Prozessor 11 stehen, sie können jedoch auch Bestandteil des Intranets sein oder im Rahmen des Internets erreichbar sein. Solche Rechner können beispielsweise beim Kunden oder bei anderen akkreditierten Messlabors stehen, denen dann die Zertifikatsdaten übermittelt werden können. Über die Datenverbindung 12 ist der mit dem Lesegerät 6 eingelesene Identifizierungscode direkt, d.h. ohne Speicherung auf der Datenbank 8, an einen entfernt stehenden Prozessor (nicht abgebildet) übermittelbar. Über eine weitere Datenverbindung , beispielsweise zu einer Kontrollwaage (nicht dargestellt) sind ferner Daten von dieser Kontrollewaage, z.B. ermittelte Gewichtsdaten, an den Prozessor 11 des Rechners 7 oder Daten vom Rechner 7, z.B. Zertifikafisdaten, an diese Kontrollwaage (nicht dargestellt) übermittelbar. Weitere Ausgestaltungen sind denkbar.

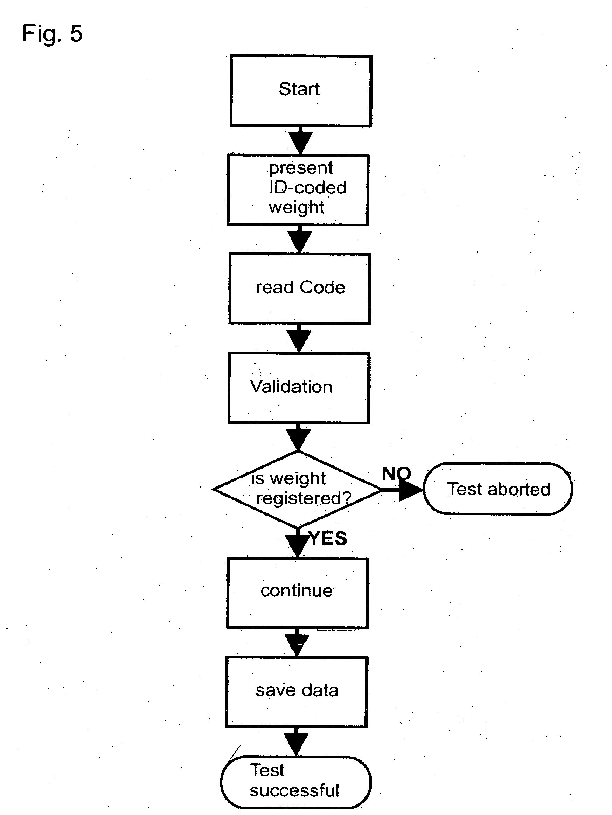

In der Figur 5 ist in einem Flussdiagramm der Ablauf eines Routinetest zur Kontrolle einer Waage mit einem erfindungsgemäss markierten Gewichtsstück 1 aufgezeigt. Der auf dem Gewichtsstück 1 aufgebrachte maschinenlesbare Identifizierungscode, beispielsweise in Form eines Matrix-Codes 2, wie ihn die Figur 2 zeigt, wird hier zum Zwecke der Überprüfung und Validierung verwendet. Es kann damit zum Beispiel festgestellt werden, ob das betreffende Gewichtsstück 1 auch dem in den Kontrollvorschriften - seien dies interne oder extern vorgegebene Vorschriften - vorgesehenen Gewichtsstück entspricht.

Im Prozessor der Waage wird ein Programm ausgeführt, welches den Vorgang der Kontrollwägung steuert und den Benutzer entsprechend anleitet. Dabei wird als erster Schritt nach dem Start das Gewichtsstück 1 einem Lesegerät 6 präsentiert, welches den Matrix-Code 2 einliest und den entsprechenden Identifizierungscode mit im Rechner 7 gespeicherten Daten zu den für die Kontrollwägung erlaubten Gewichtsstücken vergleicht. Der Rechner 7 kann ein von der Waage abgesetzter Rechner sein oder in die Waage integriert sein und im Wesentlichen dem Prozessor der Waage entsprechen. Entspricht der Identifizierungscode jenem eines zugelassenen, also registrierten Gewichtsstücks 1, so wird die Kontrollwägung freigegeben und der Routinetest kann fortgesetzt werden. Ist dies nicht der Fall, so wird die Kontrollwägung mit dem Vermerk "fehlgeschlagen" abgebrochen. Ein entsprechendes Protokoll kann auf einem mit der Waage und/oder dem Rechner 7 verbundenen Drucker ausgegeben werden. Auch ist ein entsprechender Eintrag in die mit dem Rechner 7 verbundenen Datenbank 8 denkbar.

Die Figuren stellen nur eine schematische Darstellung von beispielhaften Ausführungsformen dar. Andere Arten von Markierungen sind ebenso vorstellbar wie andere Anordnungen der Markierungen auf den einzelnen Gewichtsstücken. Auch ist es möglich, beliebig andere Informationen in den Code aufzunehmen, um damit die zentrale Rückverfolgbarkeit umfassender auszugestalten.

## Patentansprüche

1. Waage zur Durchführung von Routinetests mit einem Kontrollgewicht (1), wobei die Waage einen Prozessor aufweist,
**dadurch gekennzeichnet, dass** in dem Prozessor ein Programm ausführbar ist, das vor dem Verwiegen des Kontrollgewichts (1) dieses hinsichtlich seiner Identität überprüft und validiert, wobei das Kontrollgewicht (1) ein Kontrollgewicht für eine Waage mit einer Kennzeichnung ist, das an seiner Außenseite einen ohne oder unter minimalem Materialverlust dauerhaft aufgebrachten maschinenlesbaren Identifizierungscode aufweist, der das einzelne Gewichtsstück als Individuum wiedererkennbar macht.

2. Verfahren zur Ausführung eines Routinetests zur Kontrolle einer Waage nach Anspruch 1 mit einem identifizierbaren Kontrollgewicht (1), **dadurch gekennzeichnet, dass** im Prozessor der Waage ein Programm ausgeführt wird, welches vor dem Verwiegen des Kontrollgewichts (1) dieses hinsichtlich seiner Identität überprüft und validiert, wobei der Rückverfolgung des identifizierbaren Gewichts dienend
- ein Identifizierungscode gebildet wird, der das einzelne Gewichtsstück als Individuum wiedererkennbar macht,
- dieser Identifizierungscode in eine maschinenlesbare Codeform konvertiert wird, und
- die maschinenlesbare Codeform als Markierung ohne oder unter minimalem Materialverlust auf dem Gewichtsstück (1) aufgebracht wird.

3. Kontrollgewicht (1) für ein gravimetrisches Messinstrument, insbesondere für eine Waage, mit einer Kennzeichnung, **dadurch gekennzeichnet, dass** es an seiner Außenseite einen ohne oder unter minimalem Materialverlust dauerhaft aufgebrachten maschinenlesbaren Identifizierungscode aufweist, der das einzelne Gewichtsstück als Individuum wiedererkennbar macht, wobei der maschinenlesbare Identifizierungscode als Matrix-Code (2) oder als miniaturisierter Barcode ausgebildet ist.

4. Kontrollgewicht (1) nach Anspruch 3, **dadurch gekennzeichnet, dass** der Identifizierungscode eine eindeutig dem Gewichtsstück zugeordnete Gewichtsnummer aufweist.

5. Kontrollgewicht (1) nach Ansprüche 4 **dadurch gekennzeichnet, dass** der Identifizierungscode weitere Informationen über das individuelle Gewichtsstück, insbesondere dessen Fertigungslos-Nummer und Datumsangaben, insbesondere das Produktionsdatum, das Datum der Markierung und/oder das Datum der Erstkalibrierung enthält.

6. Kontrollgewicht (1), nach einem der Ansprüche 3 bis 5, **dadurch gekennzeichnet, dass** es aus einer Metall-Legierung mit konstanter Dichte besteht.

7. Verfahren zur Rückverfolgung eines nach einem der Ansprüche 3 bis 6 gebildeten identifizierbaren Gewichts (1), **dadurch gekennzeichnet, dass**
- ein Identifizierungscode gebildet wird, der das einzelne Gewichtsstück als Individuum wiedererkennbar macht,
- dieser Identifizierungscode in eine maschinenlesbare Codeform konvertiert wird, und
- die maschinenlesbare Codeform als Markierung oder unter minimalem Materialverlust auf dem Gewichtsstück (1) aufgebracht wird,
wobei die Konvertierung in einen MATRIX-Code (2) oder in einen Miniatur-Barcode erfolgt.

8. Verfahren nach Anspruch 7, **dadurch gekennzeichnet, dass** das Aufbringen der Markierung mittels Laserstrahl, Pinmarkieren, Ätzen oder Elektronenstrahlschreiben erfolgt.

9. Verfahren nach einem der Ansprüche 7 bis 8, **dadurch gekennzeichnet, dass** der Identifizierungscode in eine Datenbank (8) aufgenommen wird.

10. Verfahren nach einem der Ansprüche 7 bis 9, **dadurch gekennzeichnet, dass** zu einem Kontrollgewicht (1) ein Zertifikat (9) erstellt wird, welches auf den Identifizierungscode Bezug nimmt.

11. Verfahren nach einem der Ansprüche 9 oder 10, **dadurch gekennzeichnet, dass** ein weiteres Kontrollgewicht gegenüber einem ersten Kontrollgewicht, insbesondere gegenüber einem Check-Standard, kalibriert oder rekalibriert wird, und dass der Identifizierungscode des ersten Kontrollgewichts, insbesondere des Checkstandards, ebenfalls in dis Datenbank (8) aufgenommen wird und insbesondere auf dem Zertifikat (9) ausgewiesen wird.

12. Verfahren nach Anspruch 10 oder 11, **dadurch gekennzeichnet, dass** zu jedem Kontrollgewicht Zertifikatsdaten erstellt werden und dass die Zertifikatsdaten in die Datenbank (8) aufgenommen werden und der Identifizierungscode diesen in der Datenbank (8) eindeutig zugeordnet wird.

13. Verfahren nach Anspruch 12, **dadurch gekennzeichnet, dass** die Zertifikatsdaten die Zertifikatsnummer, die Kalibrier-Identifikationsnummer, das Datum der Zertifikatserstellung, Form und Material des Kontrollgewichts, die Identität der die Kontrollwägung ausführenden Person, die Wägebedingungen, die Umgebungsbedingungen, wie Temperatur und Luftdruck, den aktuellen Wägewert, sowie statistische Grössen die Kontrollwägung betreffend, umfassen.

14. Verfahren nach einem der Ansprüche 10 bis 13, **dadurch gekennzeichnet, dass** das Kontrollgewicht (1) von Zeit zu Zeit rekalibriert wird, wobei vorzugsweise ein neues Zertifikat (9) erstellt wird und dem Kontrollgewicht (1) zugeordnet wird, und dass durch die zeitliche Abfolge von Zertifikatsdaten ein Historienfile für das betreffende Kontrollgewicht (1) in der Datenbank (8) erstellt wird.

15. Verfahren nach Anspruch 14, **dadurch gekennzeichnet, dass** erfasste und/oder gespeicherte Daten mit jenen eines vorgängigen Zertifikats (9) verglichen und die Ergebnisse weiter verarbeitet werden.

16. Verfahren nach Anspruch 15, **dadurch gekennzeichnet, dass** aus den Ergebnissen Prognosen über die weitere Verwendbarkeit des Kontrollgewichts (1) erstellt werden.

17. Verfahren nach einem der Ansprüche 10 bis 16, **dadurch gekennzeichnet, dass** Zertifikatsdaten oder weitere Informationen übermittelt werden, insbesondere dass eine Erinnerung für das Nahen des Zeitpunkts einer erneuten Rekalibrierung übermittelt wird.

18. System zur Rückverfolgbarkeit von Kontrollgewichten (1) nach einem der Ansprüche 3 bis 5, enthaltend
a) mindestens ein Kontrollgewicht (1) gemäß einem der Ansprüche 3 bis 5, wobei der Identifizierungscode als Markierung aufgebracht ist,
b) ein oder mehrere Lesegeräte (6) zur Erfassung der Markierung,
c) einen oder mehrere Prozessoren (10), in dem der maschinenlesbare Identifizierungscode in einen elektronisch verarbeitbaren Identifizierungscode rekonvertiert werden kann,
d) eine oder mehrere Speichereinheiten, insbesondere eine Datenbank (8), zur Speicherung von mindestens den im Identifizierungscode enthaltenen Daten.

19. System nach Anspruch 22, **dadurch gekennzeichnet, dass** vermittels des mindestens einen Prozessors (10, 11) zusätzlich zu dem Identifizierungscode weitere Daten des Kontrollgewichts (1) erfassbar und in den Speichereinheiten, insbesondere der Datenbank (8), speicherbar sind.

20. System nach Anspruch 18 oder 19, **dadurch gekennzeichnet, dass** ein Rechner (7) zur Erstellung von Zertifikaten (9) vorhanden ist.

21. System nach einem der Ansprüche 18 bis 20, **dadurch gekennzeichnet, dass** die Datenbank (8) Zertifikatsdaten enthält, insbesondere die Zertifikatsnummer, die Kalibrier-Identifikationsnummer, das Datum der Zertifikatserstellung, Form und Material des Kontrollgewichts (1), die Identität der die Kontrollwägung ausfürenden Person, die Wägebedingungen, die Umgebungsbedingungen, wie Temperatur und Luftdruck, den aktuellen Wägewert, sowie statistische Größen die Kontrollwägung betreffend.

22. System nach einem Ansprüche 18 bis 21, **dadurch gekennzeichnet, dass** eine Kommunikationsvorrichtung (12) vorhanden ist, mit welcher aufgrund der Ergebnisse und/oder Prognosen Nachrichten über Verbindungen an andere Prozessoren und/oder Rechner übermittelt werden können.

23. Verfahren nach Anspruch 2, mit den weiteren Verfahrensmerkmalen der Ansprüche 7 bis 17.

24. Waage nach Anspruch 1, bei der das hinsichtlich seiner Identität überprüfte und validierte Kontrollgewicht (1) gemäß einem der Ansprüche 3 bis 6 ausgebildet ist.

## Claims

1. Balance serving to perform routine tests with a check weight (1), wherein the balance comprises a processor,
**characterized in that**, in said processor, a program can be executed which, prior to the weighing of the check weight (1), verifies and validates the latter in regard to its identity, wherein the check weight (1) is a check weight for a balance and comprises on its outside surface an identification in the form of a machine-readable identification code which makes the specific weight piece individually recognizable and which is indelibly formed in a manner that causes minimal or no loss of surface material.

2. Method of performing a routine test to check a balance according to claim 1 by means of an identifiable check weight (1), **characterized in that**, in the processor of the balance, a program is executed which, prior to the weighing of the check weight (1), verifies and validates the latter in regard to its identity, wherein in order to ensure the traceability of the identifiable check weight (1)
• an identification code is formed whereby the specific weight piece is given an individual identity by which it can be recognized,
• said identification code is converted into a machine-readable code format, and
• the code in the machine-readable format is put as a marking on the weight piece (1), wherein said marking is formed in a manner that causes minimal or no loss of surface material.

3. Check weight (1) for a gravimetric measuring instrument, in particular for a balance, with an identifying marking, **characterized in that** the check weight (1) comprises on its outside surface a permanently affixed machine-readable identification code which makes the specific weight piece individually recognizable and which is indelibly formed in a manner that causes minimal or no loss of surface material, wherein the machine-readable identification code is configured as a matrix code (2) or as a miniaturized barcode.

4. Check weight (1) according to claim 3, **characterized in that** the identification code includes a weight number that is uniquely assigned to the weight piece.

5. Check weight (1) according to claim 4, **characterized in that** the identification code includes further information items concerning the specific weight piece, in particular the production lot number and specific dates, in particular the production date, the date when the marking was applied and/or the date of the original calibration.

6. Check weight (1) according to one of the claims 3 to 5, **characterized in that** the check weight consists of a metal alloy with an invariant material density.

7. Method for tracing an identifiable weight (1) according to one of the claims 3 to 6 back in time, **characterized in that**
• an identification code is formed whereby the specific weight piece is given an individual identity by which it can be recognized,
• said identification code is converted into a machine-readable code format, and
• the code in the machine-readable format is put as a marking on the weight piece (1), , wherein said marking is formed in a manner that causes minimal or no loss of surface material,
wherein said conversion into a machine-readable code format comprises a conversion into a matrix code (2) or into a miniature barcode.

8. Method according to claim 7, **characterized in that** the marking is applied to the weight piece (1) by means of a laser beam, pin marking, etching, or electron beam scribing.

9. Method according to one of the claims 7 or 8, **characterized in that** the identification code is entered into a database (8).

10. Method according to one of the claims 7 to 9, **characterized in that** for a given check weight (1) a certificate (9) is produced which makes reference to the identification code.

11. Method according to one of the claims 9 or 10, **characterized in that** a further check weight is calibrated or recalibrated against a first check weight, specifically against a verification standard, and that the identification code of the first check weight, specifically of the verification standard, is likewise entered into the database (8) and in particular stated on the certificate (9).

12. Method according to one of the claims 10 or 11, **characterized in that** certificate data are established for every check weight, that said certificate data are entered into the database (8), and that the identification code is uniquely correlated to the certificate data (8) in the database (8)

13. Method according to claim 12, **characterized in that** the certificate data include the certificate number, the calibration identification number, the issue date of the certificate, the shape and material of the check weight, the identity of the person performing the weight check, the conditions under which the weighing took place, the environmental conditions such as temperature and barometric pressure, the current weight value, as well as statistical data concerning the weight check.

14. Method according to one of the claims 10 to 13, **characterized in that** the check weight (1) is recalibrated from time to time, with a new certificate (9) preferably being issued at the time of recalibration and assigned to the check weight (1), and that based on the chronological sequence of certificate data a history file is established in the database (8) for the respective check weight (1).

15. Method according to claim 14, **characterized in that** the registered and/or stored data are compared to those of a preceding certificate (9) and the results are further processed.

16. Method according to claim 15, **characterized in that** based on the results, predictions are made concerning the amount of further use to be expected from the check weight (1).

17. Method according to one of the claims 10 to 16, **characterized in that** certificate data or further items of information are transmitted, in particular that a reminder notice is transmitted regarding an approaching deadline for a recalibration.

18. System whereby check weights (1) according to one of the claims 3 to 5 can be traced back in time, comprising
a) at least one check weight (1) according to one of the claims 3 to 5, wherein the identification code is applied to the weight in the form of a marking,
b) one or more reader devices (6) serving to record the marking,
c) one or more processors (10) in which the machine-readable identification code can be reconverted into an identification code that can be electronically processed,
d) one or more data storage units, specifically a database (8) serving to store at least the data contained in the identification code.

19. System according to claim 18, **characterized in that** by means of the at least one processor (10, 11) further data of the check weight (1) in addition to the identification code can be recorded and stored in the memory storage units, specifically in the database (8).

20. System according to claim 18 or 19, **characterized in that** a computer (7) is on hand to produce certificates (9).

21. System according to one of the claims 18 to 20, **characterized in that** the database (8) contains certificate data, specifically the certificate number, the calibration identification number, the issue date of the certificate, shape and material of the check weight (1), the identity of the person performing the weight check, the conditions under which the weighing took place, the ambient conditions such as temperature and barometric pressure, the current weight value, as well as statistical quantities concerning the weight check.

22. System according to one of the claims 18 to 21, **characterized in that** a communication device (12) is on hand whereby, based on the results and/or predictions, reports can be transmitted through connections to other processors and/or computers.

23. Method according to claim 2, comprising the further method-related features of claims 7 to 17.

24. Method according to claim 1, wherein the check weight (1) which has been checked and validated in regard to its identity is configured in accordance with one of the claims 3 to 6.

## Revendications

1. Balance destinée à exécuter des tests de routine avec un poids de contrôle (1), dans laquelle la balance comporte un processeur,
**caractérisée en ce qu'**un programme peut être exécuté dans le processeur, lequel vérifie et valide le poids de contrôle (1) quant à son identité avant le pesage de celui-ci, dans laquelle le poids de contrôle (1) est un poids de contrôle pour une balance avec un marquage, qui présente, sur son côté extérieur, un code d'identification lisible par machine appliqué durablement sans perte de matériau ou avec une perte de matériau minimale, qui permet de pouvoir reconnaître chaque poids individuel en tant qu'individu.

2. Procédé destiné à exécuter un test de routine pour le contrôle d'une balance selon la revendication 1 avec un poids de contrôle identifiable (1), **caractérisé en ce qu'**un programme est exécuté dans le processeur de la balance, lequel vérifie et valide le poids de contrôle (1) quant à son identité avant le pesage de celui-ci, dans lequel servant à la traçabilité du poids identifiable
- un code d'identification est formé, qui permet de pouvoir reconnaître le poids individuel en tant qu'individu
- ce code d'identification est converti en une forme de code lisible par machine, et
- la forme de code lisible par machine est appliquée en tant que marquage sans perte de matériau ou avec une perte de matériau minimale sur le poids (1).

3. Poids de contrôle (1) pour un instrument de mesure gravimétrique, en particulier pour une balance, avec un marquage, **caractérisé en ce qu'**il présente, sur son côté extérieur, un code d'identification lisible par machine appliqué durablement sans perte de matériau ou avec une perte de matériau minimale, qui permet de pouvoir reconnaître le poids individuel en tant qu'individu, dans lequel le code d'identification lisible par machine est conçu comme un code matriciel (2) ou comme un code-barres miniaturisé.

4. Poids de contrôle (1) selon la revendication 3, **caractérisé en ce que** le code d'identification présente un numéro de poids attribué au poids de façon univoque.

5. Poids de contrôle (1) selon la revendication 4, **caractérisé en ce que** le code d'identification contient d'autres informations concernant le poids individuel, en particulier son numéro de lot de fabrication et des indications de date, en particulier la date de production, la date du marquage et/ou la date du premier étalonnage.

6. Poids de contrôle (1) selon l'une quelconque des revendications 3 à 5, **caractérisé en ce qu'**il est constitué d'un alliage métallique à densité constante.

7. Procédé de traçabilité d'un poids identifiable (1) formé selon l'une quelconque des revendications 3 à 6, **caractérisé en ce que**
- un code d'identification est formé, qui permet de pouvoir reconnaître le poids individuel en tant qu'individu,
- ce code d'identification est converti en une forme de code lisible par machine, et
- la forme de code lisible par machine est appliquée en tant que marquage ou avec une perte de matériau minimale sur le poids (1),
dans lequel la conversion est effectuée en un code matriciel (2) ou en un code-barres miniature.

8. Procédé selon la revendication 7, **caractérisé en ce que** l'application du marquage est effectuée au moyen d'un rayon laser, d'un marquage pin, d'une attaque chimique ou d'une gravure par faisceau d'électrons.

9. Procédé selon l'une quelconque des revendications 7 ou 8, **caractérisé en ce que** le code d'identification est enregistré dans une base de données (8).

10. Procédé selon l'une quelconque des revendications 7 à 9, **caractérisé en ce qu'**un certificat (9), lequel fait référence au code d'identification, est établi pour un poids de contrôle (1).

11. Procédé selon l'une quelconque des revendications 9 ou 10, **caractérisé en ce qu'**un autre poids de contrôle est étalonné ou réétalonné par rapport à un premier poids de contrôle, en particulier par rapport à un standard de contrôle, et **en ce que** le code d'identification du premier poids de contrôle, en particulier du standard de contrôle, est également enregistré dans la base de données (8) et est indiqué en particulier sur le certificat (9).

12. Procédé selon la revendication 10 ou 11, **caractérisé en ce que** des données de certificat sont établies pour chaque poids de contrôle et **en ce que** les données de certificat sont enregistrées dans la base de données (8) et le code d'identification est attribué à celles-ci de façon univoque dans la base de données (8).

13. Procédé selon la revendication 12, **caractérisé en ce que** des données de certificat comprennent le numéro de certificat, le numéro d'identification d'étalonnage, la date d'établissement du certificat, la forme et le matériau du poids de contrôle, l'identité de la personne réalisant le pesage de contrôle, les conditions de pesage, les conditions environnementales, telles que la température et la pression atmosphérique, la valeur de pesage actuelle, ainsi que des valeurs statistiques concernant le pesage de contrôle.

14. Procédé selon l'une quelconque des revendications 10 à 13, **caractérisé en ce que** le poids de contrôle (1) est réétalonné de temps en temps, dans lequel de préférence un nouveau certificat (9) est établi et attribué au poids de contrôle (1), et **en ce qu'**un fichier d'historique pour le poids de contrôle donnée (1) est créé dans la base de données (8) par la chronologie des données de certificat.

15. Procédé selon la revendication 14, **caractérisé en ce que** des données détectées et/ou enregistrées sont comparées avec celles d'un certificat précédent (9) et les résultats sont traités ultérieurement.

16. Procédé selon la revendication 15, **caractérisé en ce que** des pronostics concernant l'exploitabilité ultérieure du poids de contrôle (1) sont établis à partir des résultats.

17. Procédé selon l'une quelconque des revendications 10 à 16, **caractérisé en ce que** des données de certificat ou d'autres informations sont transmises, en particulier **en ce qu'**un rappel pour l'approche du moment d'un nouveau réétalonnage est transmis.

18. Système de traçabilité de poids de contrôle (1) selon l'une quelconque des revendications 3 à 5, contenant
a) au moins un poids de contrôle (1) selon l'une quelconque des revendications 3 à 5, dans lequel le code d'identification est appliqué en tant que marquage,
b) un ou plusieurs dispositifs de lecture (6) pour la détection du marquage,
c) un ou plusieurs processeurs (10), dans lequel le code d'identification lisible par machine peut être reconverti en un code d'identification pouvant être traité électroniquement,
d) une ou plusieurs unités de mémoire, en particulier une base de données (8), pour l'enregistrement d'au moins les données contenues dans le code d'identification.

19. Système selon la revendication 18, **caractérisé en ce que** d'autres données du poids de contrôle (1) peuvent être détectées en plus du code d'identification au moyen de l'au moins un processus (10, 11) et peuvent être enregistrées dans les unités de mémoire, en particulier de la base de données (8).

20. Système selon la revendication 18 ou 19, **caractérisé en ce qu'**un calculateur (7) est disponible pour l'établissement de certificats (9).

21. Système selon l'une quelconque des revendications 18 à 20, **caractérisé en ce que** la base de donnée (8) contient des données de certificat, en particulier le numéro de certificat, le numéro d'identification d'étalonnage, la date d'établissement du certificat, la forme et le matériau du poids de contrôle (1), l'identité de la personne réalisant le pesage de contrôle, les conditions de pesage, les conditions environnementales, telles que la température et la pression atmosphérique, la valeur de pesage actuelle, ainsi que des valeurs statistiques concernant le pesage.

22. Système selon l'une quelconque des revendications 18 à 21, **caractérisé en ce qu'**un dispositif de communication (12) est disponible, avec lequel il est possible de transmettre des messages concernant des liaisons vers d'autres processeurs et/ou calculateurs sur la base des résultats et/ou pronostics.

23. Procédé selon la revendication 2, avec les autres caractéristiques de procédé des revendications 7 à 17.

24. Balance selon la revendication 1, dans laquelle le poids de contrôle (1) vérifié et validé quant à son identité est réalisé selon l'une quelconque des revendications 3 à 6.
